(19) **Europäisches Patentamt**

**European Patent Office**

**Office européen des brevets**

(11) **EP 1 460 253 B1**

(12) **EUROPEAN PATENT SPECIFICATION**

(45) Date of publication and mention
of the grant of the patent:
**20.07.2005 Bulletin 2005/29**

(51) Int Cl.⁷: **F02D 41/00**, F02D 13/02,
F02D 41/14

(21) Application number: **03006448.9**

(22) Date of filing: **21.03.2003**

(54) **Method and arrangement for controlling the intake valve timing of an internal combustion engine**

Verfahren und Vorrichtung zur Regelung der Einlassventil-Steuerzeiten einer Brennkraftmaschine

Procédé et dispositif de commande de la distribution d'une soupape d'admission d'un moteur à combustion interne

(84) Designated Contracting States:
**DE FR GB**

(43) Date of publication of application:
**22.09.2004 Bulletin 2004/39**

(73) Proprietor: **Ford Global Technologies, Inc.
Dearborn, Michigan 48126 (US)**

(72) Inventor: **Östberg, Claes
463 34 Lilla Edet (SE)**

(74) Representative: **Romare, Laila Anette
Albihns Göteborg AB
Box 142
401 22 Göteborg (SE)**

(56) References cited:
**DE-A- 3 940 752         DE-A- 19 530 274
US-A- 5 377 654          US-B1- 6 474 323**

**Description**

TECHNICAL FIELD

The invention relates to a method and an arrangement for controlling an internal combustion engine provided with means for controlling the value of lambda by means of the intake valve timing, in particular the timing for intake valve closing.

BACKGROUND ART

In previously proposed camless or other types of variable valve timing (VVT) controlling apparatus, open-and-closure operation of engine valves, for example, an intake valve can arbitrarily be controlled using variably operated engine valve drive mechanisms and an intake air quantity induced into a corresponding engine cylinder is controlled by varying a valve closure timing of the intake valve. The intake valve closure may occur at a time before a piston reaches to an intake stroke bottom dead center as a latest valve closure timing, i.e. an early valve closure timing control. Similarly, an intake valve closure occurring at a time after a piston reaches to an intake stroke bottom dead center as a latest valve closure timing is termed a late valve closure timing control.

Since such valve open-and-closure timing controlling apparatus as described above has an object of an improvement in a fuel consumption through a non-throttle drive, the engine is basically operated with an air pressure within an intake air passage being equivalent to the atmospheric pressure. An air quantity to be induced into the cylinder is controlled by a cylinder volume at the time point of the closure of the intake valve. Such an arrangement is known from EP 1 085 192.

The main problem to be solved by the invention is to improve the control of the amount of air inducted to the engine. The modem emission legislation requires high accuracy when it comes to controlling the exhaust lambda value (air/fuel ratio). There are two main methods of lambda control in an internal combustion engine. One is to vary the amount of injected fuel and the other is to vary the amount of induced air.

The standard way of controlling the lambda value is by changing the injection time, or duty cycles, of the fuel injectors. One reason for selecting this variable is because it is in the fuel supply there are the biggest uncertainties, as the airflow through the intake conduit or manifold is normally measured quite accurately with a Hot Film Mass (HFM) sensor. To control the value of lambda by regulating the amount of induced air in a normal engine, provided with a camshaft, using the air intake throttle would require an electronic throttle, and even then the throttle response would be to slow.

In an port injected camless engine on the other hand there is an uncertainty of fuel delivery of about ±5%, mainly depending on fuel viscosity and injector coil temperature for a given injection time. During transients there may be an additional influence from fuel condensed on the walls of the intake conduits. In this case the uncertainty of the amount of induced air is greater than that of the fuel delivery, depending on the relatively large effect of reflected pressure pulses and internal EGR. In this case, the amount of induced air is the actual amount of air delivered into the combustion chamber. One way to overcome this problem could be to control the amount of trapped air by adjusting the intake valve closing (IVC) from cycle to cycle. However, if the controller parameters are tuned to function well in the area around 90 degrees after top dead centre (ATDC) the controller will be too slow around bottom dead centre (BDC).

Hence, a problem to be solved in connection with the delivery of induced air is to provide a means for intake valve control that is sufficiently accurate and fast to allow control of the air fuel ratio. A further problem to be solved by the invention is to provide a control unit provided with a controller that may be used over the entire IVC timing range.

DISCLOSURE OF INVENTION

The above problems are solved by a method, an arrangement and a computer readable storage device for controlling the value of lambda by adjusting closing timing of the inlet valve, according to claims 1, 12 and 17, and their respective dependent claims.

The invention relates to a method for operating an internal combustion engine provided with at least one cylinder, said engine comprising a fuel injector, through which fuel is injected into a combustion chamber, for each cylinder and a piston in the engine cylinder whose action causes a mixture of air and fuel within the combustion chamber to be compressed. The invention can be implemented on spark ignited engines (SI) as well as engines with spark assisted compression ignition and autoignition, commonly known as homogenous charge compression ignition (HCCI) engines. The engine is preferably, but not necessarily, directed towards gasoline internal combustion engines.

Each cylinder is provided with at least one inlet valve with variable valve timing per cylinder for admitting combustible gas and at least one exhaust valve preferably, but not necessarily, with variable valve timing per cylinder for exhausting combusted gases The intake and exhaust valves can be camless, controlled by a camshaft, or be operated by a combination of the two, e.g VVT intake valves and camshaft driven exhaust valves. A camshaft for VVT can be of the cam profile switching (CPS) type. As the invention is mainly aimed at intake valve control, it is also possible to operate the exhaust valves by means of a conventional camshaft.

A control unit is used for controlling fuel injection timing and quantity per combustion cycle injected through each fuel injector, as well as the valve timing of the inlet and outlet valves. A first sensor is provided for measuring a lambda value and at least one further sensor measures one or more engine operation parameters.

When controlling the value of lambda by means of the intake valve timing, in particular the timing for intake valve closing (IVC), it is necessary to take the IVC sensitivity into consideration. The IVC sensitivity reaches a maximum for angles near 90 degrees after top dead centre (ATDC), when the piston speed is the highest. The definition of high IVC sensitivity is that for a small change in IVC, the amount of air trapped in the cylinder may vary significantly. The IVC sensitivity can be expressed as a function of the volume of inducted air and crank angle, in that:

$$IVCsensitivty(\theta) = \frac{\partial V}{\partial \theta}\left(\frac{Air\ Volume Inducted}{Crank\ Angle}\right)$$

Where
V denotes volume and
$\theta$ denotes crank angle.

However, when choosing the IVC as the main parameter for lambda control, it may be necessary to correct the output of a conventional PID controller used to calculate the adjustment for the IVC timing, as the IVC sensitivity may vary significantly over the usable IVC range. A PID controller, where PID stands for Proportional-Integral-Derivative, is a conventional component in control units of this type, and will not be described in detail. The controller described in the embodiments below is a PID controller, but any type of conventional controller, such as a H-infinity controller or a pole-placement controller may be used. By determining a correction factor for the IVC timing, the effect of IVC sensitivity can be minimised. The correction factor is dependent on measured values of IVC and engine speed, but also on the IVC mode. If it is detected that a mode switch between early and late IVC timing will occur between a current and a subsequent combustion cycle, then the polarity of the adjustment signal must be changed. This will be described in further detail below and in connection with the attached figures.

A preferred embodiment of the invention involves a method for adjusting the intake valve closing timing for air/fuel ratio (lambda) control. The control is preferably, but not necessarily, performed from cycle to cycle, by:

- measuring a lambda value and determining a required change of the lambda value for a subsequent combustion cycle;
- generating an adjustment signal for adjusting IVC timing for a subsequent cycle based on the required change of the lambda value;
- determining if IVC timing will occur early or late with respect to a switching point at which maximum filling of the cylinder is achieved for said subsequent cycle; and
- changing the polarity of said signal if it is determined that a switch will occur between early and late IVC timing.

In the given examples, the expression "cycle-to-cycle" is defined as a subsequent cycle in the firing order of the engine. For instance, for a 5-cylinder engine with the firing order 1-2-4-5-3, the intake cycle of the first cylinder is followed by the intake cycle of the second cylinder, and so on. In this case the adjustment signal for adjusting IVC timing is generated for an immediately subsequent cycle. However, the invention can also be applied to the case when "cycle-to-cycle" refers to the subsequent intake cycle for the same cylinder, e.g. from cylinder 1 to cylinder 1.

Note that although the intake valve closing can be adjusted from cycle-to-cycle, the measured value of lambda is dependent on the transport time of the exhaust gas from the cylinder to the sensor and subject to a time lag and response time inherent in the sensor. Hence, the value of lambda is not possible to control in real time, that is from cycle-to-cycle, but is adjusted in relation to a subsequent cycle, which may occur a number of cycles later. Therefore difference should be made between the expression relating to a "subsequent cycle" in connection with lambda and IVC timing respectively.

The signal for adjusting the IVC is generated by comparing a measured lambda value with a required value of lambda and processing the difference signal in a PID controller to calculate a nominal required adjustment in IVC timing ($\Delta$IVC) for a subsequent cycle. The output from the PID controller is an adjustment signal representing the required change in IVC timing. The initial comparison is preferably done by subtracting a signal representing a required lambda value from a signal representing a measured lambda value.

The polarity of the PID controller output will be changed when a switch between early and late IVC timing ($IVC_E$, $IVC_L$) is required for a subsequent combustion cycle. Determination of whether the said polarity of the IVC adjustment signal must be changed is achieved by:

- determining an IVC timing mode by acquiring a signal from a mode selector in the control unit , which selector determines said mode for the subsequent cycle depending on measured engine parameters;
- determining if the IVC timing for the subsequent cycle requires a switch between early and late IVC timing mode; and
- generating a correction signal indicative of a change in polarity if a switch is required.

The signal acquired from the mode selector is preferably, but not necessarily, a binary signal.

A corrected IVC adjustment signal may be achieved by multiplying said adjustment signal by said correction signal. The state of the signal from the mode selector determines the polarity of the correction signal.

According to a further embodiment, the intake valve closure sensitivity for the IVC timing for a current cycle may be determined by selecting a sensitivity correction factor from a matrix, based on calculated IVC timing mode and measured valued for engine speed and IVC timing. The IVC timing mode is determined by acquiring a signal from a mode selector in the control unit, which selector determines said mode for the subsequent cycle depending on measured engine parameters. As stated above, the corrected IVC adjustment signal is obtained by multiplying said adjustment signal by said correction signal.

The invention further relates to an internal combustion engine provided with at least one cylinder, as defined above. The engine is preferably, but not necessarily aspirated and port injected. According to a preferred embodiment, the engine control unit is arranged to adjust the closing timing of the inlet valve to control the air/fuel ratio (lambda), preferably, but not necessarily from cycle to cycle. The control unit is provided with:

- a lambda calculating section, arranged to calculate a required change of a lambda value for a subsequent combustion cycle;
- an IVC adjustment calculating section, arranged to calculate an adjustment signal for adjusting IVC timing for a subsequent cycle based on the required change of the lambda value;
- an IVC mode calculating section, arranged to calculate if the IVC timing for said subsequent cycle will occur early or late with respect to a switching point at which maximum filling of the cylinder is achieved for said subsequent cycle; and
- a polarity changing section, arranged to change the polarity of said signal if it is determined that a switch will occur between early and late IVC timing.

The IVC adjustment calculating section may be arranged to calculate an adjustment signal for a subsequent cycle, which subsequent cycle can be either an immediately subsequent cycle or a subsequent cycle for the same cylinder.

The IVC mode calculating section is provided with an IVC mode selector, which selector determines if early or late IVC timing is required for the subsequent cycle based on output signals from at least one further engine parameter sensor.

The control unit is further provided with a IVC sensitivity determining section, arranged to determine intake valve closure sensitivity for the IVC timing for the subsequent cycle based on calculated IVC mode and measured values for engine speed and IVC timing by selecting a sensitivity correction factor from a matrix stored in the control unit.

The lambda controller is also provided with a correcting section, arranged to calculate a corrected IVC adjustment signal by multiplying said adjustment signal by a signal representing said correction factor.

The IVC adjustment calculating section may comprise a PID controller, arranged to process a difference signal from a lambda value comparator, or subtractor, and calculating said IVC adjustment signal.

According to a further preferred embodiment, the invention relates to a computer readable storage device having stored therein data representing instructions executable by a computer to operate an internal combustion engine, the engine having a piston disposed in a cylinder to define a combustion chamber, intake valves for admitting fresh air into the cylinder, a fuel injector for injecting fuel into the combustion chamber, and exhaust valves for discharging exhaust gas resulting from combustion within the cylinder, wherein opening and closing timings of at least the intake valves are adjustable, the computer readable storage device comprising:

- instructions for adjusting opening and closing timings of at least the intake valves such that the piston reciprocates within the cylinder to perform an exhaust phase, an intake phase, a compression phase, and an expansion phase;
- instructions for measuring a lambda value and determining a required change of the lambda value for a subsequent combustion cycle;

- instructions for generating an adjustment signal for adjusting IVC timing for a subsequent cycle based on the required change of the lambda value;
- instructions for determining if IVC timing will occur early or late with respect to a switching point at which maximum filling of the cylinder is achieved for said subsequent cycle; and
- instructions for changing the polarity of said signal if it is determined that a switch will occur between early and late IVC timing.

BRIEF DESCRIPTION OF DRAWINGS

In the following text, the invention will be described in detail with reference to the attached drawings. These drawings are used for illustration only and do not in any way limit the scope of the invention. In the drawings:

Figure 1       shows a schematic internal combustion engine according to the invention;

Figure 2       shows a schematic block diagram illustrating a lambda controller according to the invention;

Figure 3A      shows a diagram illustrating IVC sensitivity over crank angle in early IVC;

Figure 3B      shows a diagram illustrating IVC sensitivity over crank angle in late IVC;

MODES FOR CARRYING OUT THE INVENTION

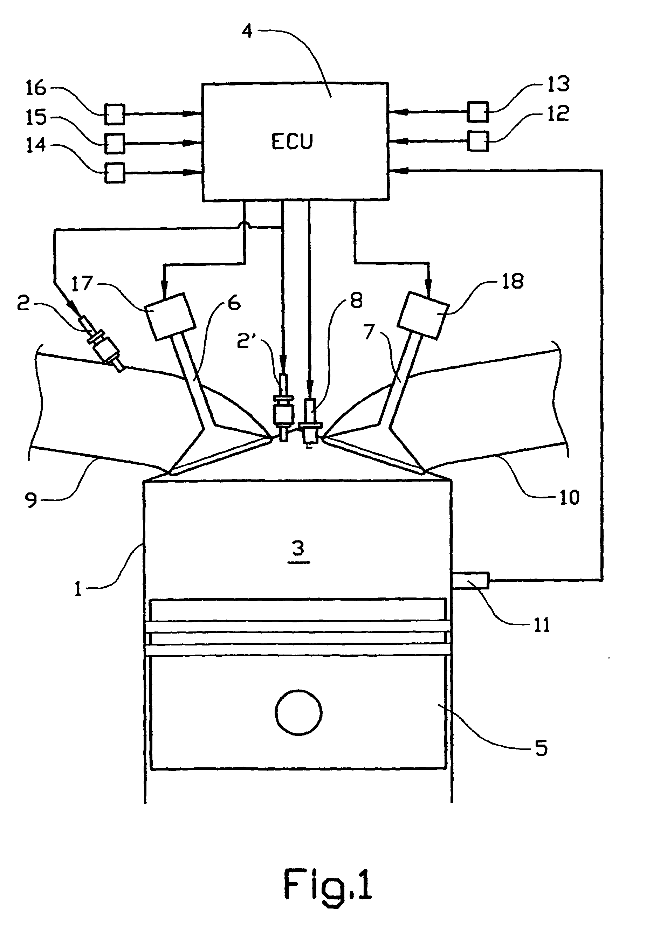

Figure 1 shows a schematic illustration of an internal combustion engine according to the invention. The engine is provided with at least one cylinder 1 and is provided with a fuel injector 2 for port injection of fuel. Alternatively the cylinder is provided with a fuel injector 2', through which fuel is injected directly into a combustion chamber 3, for each cylinder. An electronic control unit 4 (ECU) controls fuel injection quantity per combustion cycle injected through each fuel injector. A piston 5 in the engine cylinder has a compression action that causes a mixture of air and fuel within the combustion chamber to be compressed before ignition. The cylinder is provided with at least one inlet valve 6 for admitting gas which includes fresh air into said cylinder and at least one exhaust valve 7 for exhausting combusted gases from said cylinder. Air is supplied through an intake conduit 9 connected to an intake manifold, while exhaust gas is exhausted through an exhaust conduit 10. During spark ignition (SI) mode, the ignition of the fuel/air mixture is ignited by a spark plug 8.

The control unit receives signals from at least one sensor for measuring engine operation parameters, which sensors may include one or more of a combustion chamber pressure sensor 11, an intake manifold pressure sensor 12 and a λ-probe 13 for measuring the air-fuel ratio λ in the exhaust conduit 10, as well as sensors for intake air mass flow 14, engine speed 15 and at least one further sensor 16, such as an intake air temperature sensor. The control unit 4 controls the intake and exhaust valves 6, 7 by means of valve actuators 17, 18. The actuators may be either electrically, piezoelectrically, pneumatically, hydraulically or mechanically operated.

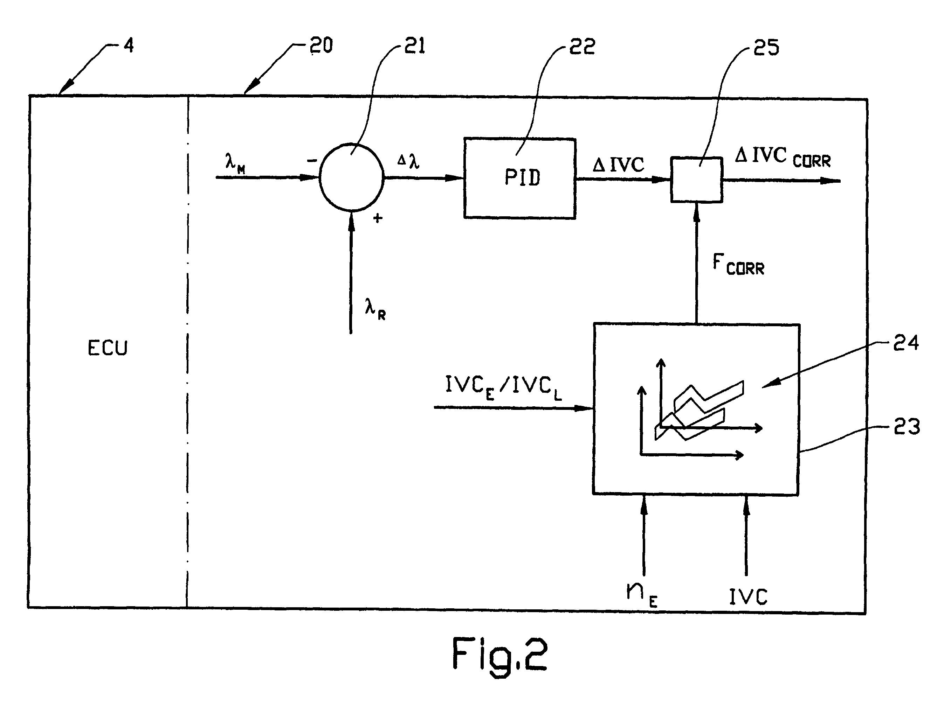

Figure 2 shows a schematic block diagram illustrating a lambda controller 20 according to the invention. In this embodiment the lambda controller is placed in the ECU 4. In the following text the term "control unit" will be used to denote the ECU 4 including the lambda controller 20. The lambda controller 20 comprises a difference amplifier or subtractor 21 in which a measured value of lambda $\lambda_M$ is subtracted from a required value of lambda $\lambda_R$. The difference signal is transmitted to a PID controller 22 that calculates a nominal required adjustment in IVC timing for a subsequent combustion cycle and generates an adjustment signal ΔIVC.

Depending on a possible change in operating mode for the subsequent combustion cycle with respect to the operating mode current combustion cycle, the adjustment signal ΔIVC may need to be corrected.

For this purpose the control unit 4 comprises an IVC mode calculating section that is provided with an IVC mode selector. The mode selector determines if early intake valve closing $IVC_E$ or late intake valve closing $IVC_L$ timing is required for the subsequent combustion cycle based on the current IVC timing, output signals from a number of engine parameter sensors and the driver demand on the engine.

In addition the lambda controller 20 is provided with an IVC sensitivity determining section 23, arranged to determine intake valve closure sensitivity for the IVC timing for the subsequent cycle based on the calculated IVC mode and input signals representing measured values for engine speed $n_E$ and IVC timing. Based on the engine speed $n_E$, current IVC timing and a possible change in early or late IVC timing, a sensitivity correction factor $F_{CORR}$ or sensitivity number is interpolated from a matrix 24 stored in the lambda controller 20. The start values for the vectors used in said matrix are calculated from differentiating the intake volume as a function of crank angle degree, as described in "Internal Combustion Engine Fundamentals" by John B. Heywood; McGraw-Hill, 1988; Chapter 2.2. By taking the engine speed into account, the accuracy of the calculations is improved.

In operation, the engine combustion cycle may be switched at a point between early IVC ($IVC_E$) and late IVC ($IVC_L$) at any time, depending on the operating conditions. In this context "early" generally means closing the intake valve before BDC and "late" means closing after BDC, i.e. pushing air back into the intake manifold. The switching point is the intake closure timing at which maximum filling of the combustion chamber is achieved. At low engine speeds the switching point between early and late occurs near BDC. However, at higher engine speeds said switching point will occur at 20 to 60 degrees after BDC. The position of the switching point in relation to the engine speed is determined by the matrix for the respective mode. A signal representing $IVC_E$ or $IVC_L$ mode, as selected by the control unit 4 for the subsequent combustion cycle, is transmitted to the IVC sensitivity determining section 23 of the lambda controller 20. This IVC mode signal is preferably, but not necessarily, a binary signal. If the IVC mode signal indicates that a mode switch between early and late IVC timing will occur between a current and a subsequent combustion cycle, then the polarity of the adjustment signal ΔIVC generated by the the PID controller must be changed. This is achieved by selecting a sensitivity correction factor $F_{CORR}$ or sensitivity number from different parts of the matrix 24 depending on the value of the mode signal. The said sensitivity correction factor or sensitivity number actually represents the inverted IVC sensitivity, but for control purposes a multiplication operation, as described below, is preferable.

Alternatively, the lambda controller is provided with two separate matrices, whereby each matrix is associated with the $IVC_E$ or $IVC_L$ modes respectively.

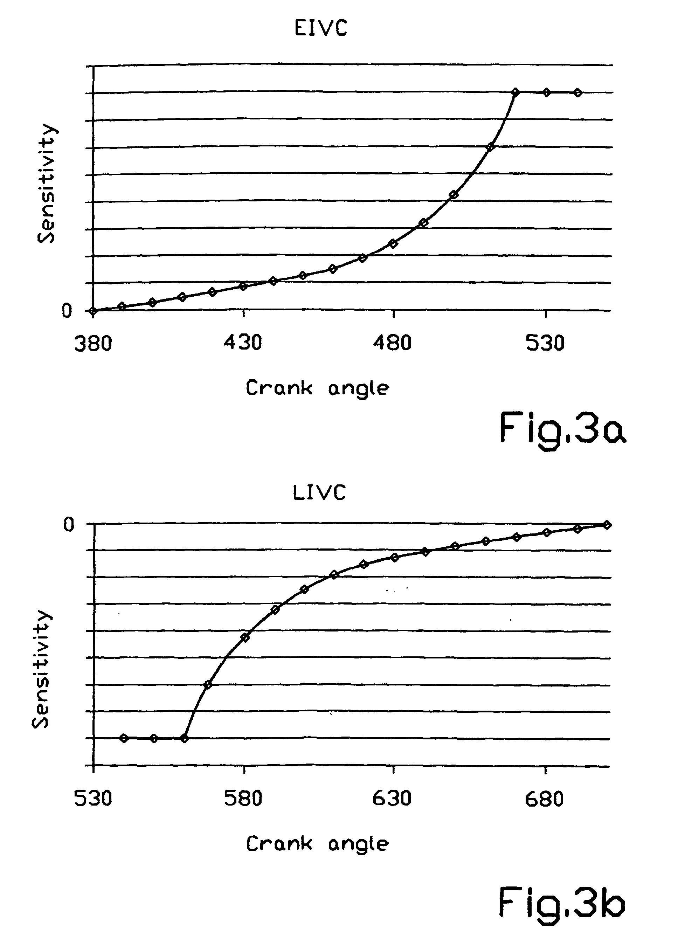

Figures 3A and 3B show schematic diagrams representing the variation of the sensitivity correction factor $F_{CORR}$ over crank angle θ. Figure 3A shows the variation of the sensitivity correction factor $F_{CORR}$ from a relatively low to a relatively high positive value over a range of crank angles between 390 and 540 °, where BDC occurs at 540 °. Figure 3B shows the variation of the sensitivity correction factor $F_{CORR}$ from a relatively high to a relatively low negative value over a range of crank angles between 540 and 690 °, where BDC occurs at 540 °.

The lambda controller 20 is further provided with a correcting section 25, arranged to calculate a corrected IVC adjustment signal $ΔIVC_{CORR}$ by multiplying said adjustment signal ΔIVC by a signal representing said correction factor $F_{CORR}$. The corrected adjustment signal $ΔIVC_{CORR}$ output from the correcting section 25 is then transmitted to the section of the control unit 4 calculating IVC timing. The corrected adjustment signal $ΔIVC_{CORR}$ is added to the current demand for IVC timing and transmitted to the valve actuators.

The invention is not limited to the embodiments described above, but may be varied freely within the scope of the appended claims.

**Claims**

1. A method for operating an internal combustion engine provided with at least one cylinder having at least one inlet valve with variable valve timing per cylinder for admitting combustible gas, at least one exhaust valve per cylinder for exhausting combusted gases, and a control unit that controls the valve timing of at least the inlet valves; **characterized by** the method comprising adjusting closing timing of the inlet valve for air/fuel ratio control by:

   - measuring a lambda value and determining a required change of the lambda value for a subsequent combustion cycle;
   - generating an adjustment signal for adjusting inlet valve closing timing for a subsequent cycle based on the required change of the lambda value;
   - determining if inlet valve closing timing will occur early or late with respect to a switching point at which maximum filling of the cylinder is achieved for said subsequent cycle, and

   changing the polarity of said signal if it is determined that a switch will occur between early and late inlet valve closing timing.

2. A method for operating an engine according to claim 1, **characterized in that** the signal for adjusting the inlet valve closing is generated by:

   - comparing a measured lambda value with a required value of lambda and passing the difference signal through a controller, and
   - calculating a nominal required change in inlet valve closing timing (ΔIVC) for a subsequent cycle.

3. A method for operating an engine according to claim 2, **characterized by** changing the polarity of the controller output when a switch between early and late inlet valve closing timing ($IVC_E$, $IVC_L$) for a subsequent cycle is required.

4. A method for operating an engine according to claim 2, **characterized by** generating an adjustment signal for adjusting inlet valve closing timing for an immediately subsequent cycle based on the required change of the lambda value.

5. A method for operating an engine according to claim 1, **characterized by** generating an adjustment signal for adjusting inlet valve closing timing for a subsequent cycle for each cylinder based on the required change of the lambda value.

6. A method for operating an engine according to claim 1, **characterized by** determining if the polarity of the inlet valve closing adjustment signal must be changed by:

   - determining an inlet valve closing timing mode by acquiring a signal from a mode selector in the control unit , which selector determines said mode for the subsequent cycle depending on measured engine parameters;
   - determining if the inlet valve closing timing for the subsequent cycle causes a switch between early and late inlet valve closing timing mode;
   - generating a correction signal indicative of a change in polarity if a switch is required.

7. A method for operating an engine according to claim 1, **characterized by** determining if the polarity of the inlet valve closing adjustment signal must be changed by:

   - calculating the inlet valve closing timing for the subsequent cycle based on the current inlet valve closing timing and the adjustment signal ($\Delta$IVC);
   - determining if the inlet valve closing timing for the subsequent cycle causes a switch between early and late inlet valve closing timing; and
   - generating a correction signal indicative of a change in polarity if a switch is required.

8. A method for operating an engine according to claim 6 or 7, **characterized by** determining a corrected inlet valve closing adjustment signal by multiplying said adjustment signal by said correction signal.

9. A method for operating an engine according to claim 1, **characterized by** determining intake valve closure sensitivity for the inlet valve closing timing for a current cycle by selecting a sensitivity correction factor from a matrix, based on measured valued for engine speed and inlet valve closing timing

10. A method for operating an engine according to claim 9, **characterized in** determining an inlet valve closing timing mode by acquiring a signal from a mode selector in the control unit , which selector determines said mode for the subsequent cycle depending on measured engine parameters;

11. A method for operating an engine according to claim 10, **characterized in** determining a corrected inlet valve closing adjustment signal by multiplying said adjustment signal by said correction signal.

12. An internal combustion engine provided with at least one cylinder (1), comprising:

   - a fuel injector (2), through which fuel is injected into a combustion chamber, for each cylinder;
   - a piston (5) in the engine cylinder whose action causes a mixture of air and fuel within the combustion chamber to be compressed;
   - at least one inlet valve (6) with variable valve timing per cylinder for admitting combustible gas;
   - at least one exhaust valve (7) for exhausting combusted gases;
   - a control unit (4) that controls fuel injection quantity per combustion cycle injected through each fuel injector and the valve timing of at least the inlet valves;
   - a first sensor (13) is provided for measuring an air/fuel ratio; and
   - at least one further sensor for measuring an engine operation parameter;

   **characterized in that** the control unit is arranged to adjust the closing timing of the inlet valve to control the air/fuel ratio, whereby the control unit is provided with:

   - a lambda calculating section (21), arranged to calculate a required change of a lambda value ($\Delta\lambda$) for a subsequent combustion cycle;
   - an inlet valve closing adjustment calculating section (22), arranged to calculate an adjustment signal ($\Delta$IVC)

for adjusting inlet valve closing timing for a subsequent cycle based on the required change of the lambda value;
- an inlet valve closing mode calculating section, arranged to calculate if the inlet valve closing timing for said subsequent cycle will occur early or late with respect to a switching point at which maximum filling of the cylinder is achieved for said subsequent cycle; and
- a polarity changing section, arranged to change the polarity of said signal if it is determined that a switch will occur between early and late inlet valve closing timing.

**13.** A combustion engine according to claim 12, **characterized in** the inlet valve closing mode calculating section is provided with an inlet valve closing mode selector, which selector determines if early or late inlet valve closing timing is required for the subsequent cycle.

**14.** A combustion engine according to claim 12, **characterized in** the control unit is further provided with a inlet valve closing sensitivity determining section (23), arranged to determine intake valve closure sensitivity for the inlet valve closing timing for the subsequent cycle based on calculated inlet valve closing mode and measured values for engine speed and inlet valve closing timing by interpolating a sensitivity correction factor from at least one matrix stored in the control unit.

**15.** A combustion engine according to claim 14, **characterized in** the control unit is further provided with a correcting section (25), arranged to calculate a corrected inlet valve closing adjustment signal ($\Delta IVC_{CORR}$) by multiplying said adjustment signal ($\Delta IVC$) by a signal representing said correction factor ($F_{CORR}$).

**16.** A combustion engine according to claim 12, **characterized in** the inlet valve closing adjustment calculating section comprises a controller (22), arranged to process a difference signal ($\Delta\lambda$) from a lambda value comparator and calculating said inlet valve closing adjustment signal ($\Delta IVC$).

**17.** A computer readable storage device having stored therein data representing instructions executable by a computer to operate an internal combustion engine, the engine having a piston disposed in a cylinder to define a combustion chamber, intake valves for admitting fresh air into the cylinder, a fuel injector for injecting fuel into the combustion chamber, and exhaust valves for discharging exhaust gas resulting from combustion within the cylinder, wherein opening and closing timings of at least the intake valves are adjustable, the computer readable storage device comprising:

- instructions for adjusting opening and closing timings of at least the intake valves such that the piston reciprocates within the cylinder to perform an exhaust phase, an intake phase, a compression phase, and an expansion phase;
- instructions for measuring a lambda value and determining a required change of the lambda value for a subsequent combustion cycle;
- instructions for generating an adjustment signal for adjusting inlet valve closing timing for a subsequent cycle based on the required change of the lambda value;
- instructions for determining if inlet valve closing timing will occur early or late with respect to a switching point at which maximum filling of the cylinder is achieved for said subsequent cycle; and
- instructions for changing the polarity of said signal if it is determined that a switch will occur between early and late inlet valve closing timing.

**Patentansprüche**

**1.** Verfahren zum Betreiben einer Verbrennungskraftmaschine mit wenigstens einem Zylinder, der wenigstens ein Einlassventil mit variabler Ventilsteuerzeit pro Zylinder zur Zufuhr von verbrennbarem Kraftstoff, wenigstens ein Abgasventil pro Zylinder zum Ausstoß von Abgasen und eine Steuerungseinheit aufweist, die die Ventilsteuerzeit wenigstens der Einlassventile steuert,
**gekennzeichnet durch** das Verfahren, das die Schließzeit des Einlassventils für die Steuerung des Luft/Brennstoff-Verhältnisses **durch** folgende Verfahrensschritte eingestellt wird:

- Messen eines Lambda-Wertes und Bestimmen einer erforderlichen Veränderung des Lambda-Wertes für einen folgenden Verbrennungszyklus;
- Erzeugen eines Einstellungssignals zur Einstellung der Schließzeiteinstellung des Einlassventils für einen folgenden Zyklus, das auf der erforderlichen Änderung des Lambda-Wertes basiert;

- Feststellen, ob die Schließzeiteinstellung des Einlassventils früh oder spät mit Bezug auf einen Schaltpunkt liegt, an dem die maximale Füllung des Zylinders für den folgenden Zyklus erreicht wird, und Ändern der Polarität dieses Signals, wenn festgestellt wird, dass eine Umschaltung zwischen einer frühen und einer späten Schließzeiteinstellung für das Einlassventil stattfindet.

2. Verfahren zum Betreiben einer Maschine nach Anspruch 1, **dadurch gekennzeichnet, dass** das Signal zur Einstellung des Schließens des Einlassventils durch folgendes Verfahren erzeugt wird durch:

   - Vergleichen des gemessenen Lambda-Wertes mit einem erforderlichen Wert von Lambda, und Schicken des Differenzsignals durch eine Steuerung, und
   - Berechnen einer nominal erforderlichen Veränderung der Schließzeiteinstellung des Einlassventils ($\Delta$IVC) für einen folgenden Zyklus.

3. Verfahren zum Betreiben einer Maschine nach Anspruch 2, **dadurch gekennzeichnet, dass** die Polarität der Ausgangsleistung der Steuerung verändert wird, wenn eine Umschaltung zwischen eine frühen und späten Schließzeiteinstellung ($IVC_E$, $IVC_L$) des Einlassventils für einen folgenden Zyklus erforderlich ist.

4. Verfahren zum Betreiben einer Maschine nach Anspruch 2, **dadurch gekennzeichnet, dass**, basierend auf der erforderlichen Veränderung des Lambda-Wertes, ein Anpassungssignal zur Anpassung der Schließzeiteinstellung des Einlassventils für einen unmittelbar folgenden Zyklus erzeugt wird.

5. Verfahren zum Betreiben einer Maschine nach Anspruch 1, **dadurch gekennzeichnet, dass**, basierend auf der erforderlichen Veränderung des Lambda-Wertes, ein Anpassungssignal zur Anpassung der Schließzeiteinstellung des Einlassventils für einen folgenden Zyklus jedes Zylinders erzeugt wird.

6. Verfahren zum Betreiben einer Maschine nach Anspruch 1, **gekennzeichnet durch** Bestimmen, ob die Polarität des Anpassungssignals für das Schließen des Einlassventils geändert werden muss, indem

   - einen Modus für die Schließzeiteinstellung des Einlassventils **dadurch** bestimmt wird, dass man ein Signal von einem Modusselektor in der Steuerungseinheit erhält, wobei der Selektor diesen Modus für den folgenden Zyklus in Abhängigkeit von gemessenen Motorparametern bestimmt;
   - bestimmt wird, ob die Schließzeiteinstellung des Einlassventils für den folgenden Zyklus zu einer Umschaltung zwischen einem frühen und einem späten Modus für die Schließzeiteinstellung des Einlassventils führt; und
   - ein Korrektursignal erzeugt wird, das einen Wechsel der Polarität anzeigt, wenn eine Umschaltung erforderlich ist.

7. Verfahren zum Betreiben einer Maschine nach Anspruch 1, **gekennzeihnet durch** Bestimmen, ob die Polarität des Anpassungssignals für das Schließen des Einlassventils geändert werden muss, indem

   - die Schließzeiteinstellung des Einlassventils für den folgenden Zyklus auf der Basis der gegenwärtigen Schließzeiteinstellung des Einlassventils und des Anpassungssignals ($\Delta$IVC) berechnet wird;
   - bestimmt wird, wenn die Schließzeiteinstellung des Einlassventils für den folgenden Zyklus zu einer Umschaltung zwischen einer frühen und einer späten Schließzeiteinstellung für das Einlassventil führt; und
   - ein Korrektursignal erzeugt wird, das einen Wechsel der Polarität anzeigt, wenn eine Umschaltung erforderlich ist.

8. Verfahren zum Betreiben einer Maschine nach Anspruch 6 oder 7, **gekennzeichnet durch** Bestimmen eines korrigierten Anpassungssignals für das Schließen des Einlassventils **durch** Multiplikation dieses Anpassungssignals mit diesem Korrektursignal.

9. Verfahren zum Betreiben einer Maschine nach Anspruch 1, **gekennzeichnet durch** Bestimmen der Schließempfindlichkeit für die Schließzeiteinstellung des Einlassventils in dem gegenwärtigen Zyklus **dadurch**, dass ein Empfindlichkeitskorrekturfaktor aus einer Matrix bestimmt wird, die auf gemessenen Werten der Motorgeschwindigkeit und der Schließzeiteinstellung des Einlassventils basiert.

10. Verfahren zum Betreiben einer Maschine nach Anspruch 9, **gekennzeichnet durch** Bestimmen eines Modus für die Schließzeiteinstellung des Einlassventils **dadurch**, dass ein Signal von einem Modusselektor in der Steuerungseinheit erhalten wird, wobei der Selektor diesen Modus für den folgenden Zyklus in Abhängigkeit von gemessenen Motorparametern bestimmt.

**11.** Verfahren zum Betreiben einer Maschine nach Anspruch 10, **gekennzeichnet durch** Bestimmung eines korrigierten Anpassungssignals für das Schließen des Einlassventils **durch** Multiplikation dieses Anpassungssignals mit diesem Korrektursignal.

**12.** Verbrennungskraftmaschine mit wenigstens einem Zylinder (1), bestehend aus:

- einer Kraftstoffeinspritzeinrichtung (2), durch die Kraftstoff in die Verbrennungskammer eines jeden Zylinders eingespritzt wird;
- einem Kolben (5) in dem Motorzylinder, durch dessen Wirkungsweise ein Gemisch von Luft und Kraftstoff in der Verbrennungskammer komprimiert wird;
- wenigstens einem Einlassventil (6) mit einer veränderbaren Ventilsteuerzeiteinstellung für jeden Zylinder zur Zufuhr von brennbarem Kraftstoff;
- wenigstens einem Auslassventil (7) zum Ausstoß von Abgasen;
- eine Steuerungseinheit (4) zur Steuerung der Menge des pro Verbrennungszyklus eingespritzten Kraftstoffs, der durch jede Kraftstoffeinspritzung und durch die Ventilsteuerzeiteinstellung wenigstens der Einlassventile eingespritzt wird;
- einem ersten Sensor (13) zur Messung des Luft/Kraftstoff-Verhältnisses; und
- wenigstens einem weiteren Sensor zur Messung eines Motorbetriebsparameters;

**dadurch gekennzeichnet, dass** die Steuerungseinheit zur Einstellung der Schließzeiteinstellung des Einlassventils zur Steuerung des Luft/Brennstoff-Verhältnisses eingerichtet ist, wobei die Steuerungseinrichtung folgende Merkmale aufweist:

- eine Berechnungseinrichtung (21) für den Lambdawert, die so ausgeführt ist, dass sie eine erforderliche Veränderung des Lambdawertes ($\Delta\lambda$) für einen folgenden Verbrennungszyklus berechnen kann;
- eine Berechnungseinrichtung (22) für die Anpassung des Schließens des Einlassventils, die so ausgeführt ist, dass sie, auf der erforderlichen Änderung des Lambda-Wertes basierend, ein Anpassungssignal ($\Delta$IVC) zur Anpassung der Schließzeiteinstellung des Einlassventils für einen folgenden Zyklus berechnet;
- eine Berechnungseinrichtung für den Schließmodus des Einlassventils, die so ausgeführt ist, dass sie berechnet, wenn die Schließzeiteinstellung des Einlassventils für diesen folgenden Zyklus früh oder spät mit Rücksicht auf einen Umschaltpunkt liegt, bei dem eine maximale Füllung des Zylinders für den folgenden Zyklus erreicht wird; und
- eine Einrichtung zum Wechsel der Polarität, die so ausgeführt ist, dass sie die Polarität des genannten Signals verändert, wenn festliegt, dass eine Umschaltung zwischen einer frühen und einer späten Schließzeiteinstellung für das Einlassventil stattfindet.

**13.** Verbrennungskraftmaschine nach Anspruch 12, **dadurch gekennzeichnet, dass** die Berechnungseinrichtung für den Schließmodus des Einlassventils mit einem Modusselektor für das Schließen des Einlassventils versehen ist, wobei dieser Selektor bestimmt, wenn eine frühe oder späte Schließzeiteinstellung des Einlassventil für den folgenden Zyklus erforderlich ist.

**14.** Verbrennungskraftmaschine nach Anspruch 12, **dadurch gekennzeichnet, dass** die Steuerungseinheit außerdem mit einer Einrichtung zur Bestimmung der Schließempfindlichkeit des Einlassventils (23) versehen ist, die so ausgeführt ist, dass die Schließempfindlichkeit des Einlassventils für die Schließzeiteinstellung des Einlassventils für den folgenden Zyklus bestimmt wird, die auf dem berechneten Schließmodus des Einlassventils und gemessenen Werten für die Motorgeschwindigkeit und die Schließzeiteinstellung des Einlassventils basiert, indem man einen Empfindlichkeitskorrekturfaktor aus wenigstens einer in der Steuerungseinheit gespeicherten Matrix interpoliert.

**15.** Verbrennungskraftmaschine nach Anspruch 14, **dadurch gekennzeichnet, dass** die Steuerungseinrichtung weiter eine Korrektureinheit (25) aufweist, die so ausgeführt ist, dass sie ein korrigiertes Anpassungssignal ($\Delta$IVC$_{CORR}$) für das Schließen des Einlassventils berechnet und dieses Anpassungssignal ($\Delta$IVC) mit einem Signal multipliziert, das diesen Korrekturfaktor (F$_{CORR}$) darstellt.

**16.** Verbrennungskraftmaschine nach Anspruch 12, **dadurch gekennzeichnet, dass** die Berechnungseinheit zur Anpassung für das Schließen des Einlassventils eine Regeleinrichtung (22) aufweist, die so ausgeführt ist, dass sie

ein Differenzsignal ($\Delta\lambda$) aus einem Komparator für den Lambda-Wert verarbeitet und dieses Anpassungssignals ($\Delta$IVC) für das Schließen des Eingangsventils berechnet.

**17.** Computerlesbare Speichereinrichtung, in der Daten gespeichert sind, die von einem Computer ausführbare Anweisungen zum Betrieb einer Verbrennungskraftmaschine darstellen, wobei die Maschine einen in einem eine Verbrennungskammer darstellenden Zylinder angeordneten Kolben, Einlassventile zur Zufuhr frischer Luft in den Zylinder, eine Brennstoffeinspritzung zum Einspritzen von Brennstoff in die Verbrennungskammer und Auslassventile zum Ausstoßen von aus der Verbrennung in dem Zylinder stammendem Abgas aufweist, wobei die Öffnungs- und Schließzeiteinstellung wenigstens der Einlassventile einstellbar sind, und wobei der von einem Computer lesbare Speicher folgende Merkmale aufweist;

- Anweisungen zur Anpassung der Öffnungs- und Schließzeiteinstellungen für wenigstens die Einlassventile derart, dass sich der Kolben innerhalb des Zylinders zur Ausführung einer Ausstoßphase, einer Einsaugphase, einer Kompressionsphase und einer Expansionsphase hin und her bewegt;
- Anweisungen zur Messung eines Lambda-Wertes und zur Bestimmung einer erforderlichen Änderung des Lambda-Wertes für einen folgenden Verbrennungszyklus;
- Anweisungen zur Erzeugung eines Anpassungssignals zur Anpassung der Schließzeiteinstellung des Einlassventils für einen folgenden Zyklus, basierend auf der erforderlichen Veränderung des Lambda-Wertes;
- Anweisungen zur Bestimmung, wenn die Schließzeiteinstellungen des Einlassventils mit Rücksicht auf einen Umschaltpunkt, an dem eine maximale Füllung des Zylinders für den folgenden Zyklus erreicht ist, früh oder spät erfolgt; und
- Anweisungen zur Veränderung der Polarität dieses Signals wenn ermittelt wird, dass eine Umschaltung zwischen einer frühen und einer späten Schließzeiteinstellung für das Einlassventil stattfindet.

**Revendications**

1. Procédé pour faire fonctionner un moteur à combustion interne muni d'au moins un cylindre, ayant au moins une soupape d'admission, avec un cadencement de soupape variable par cylindre pour admission d'un gaz combustible, au moins une soupape d'échappement par cylindre pour échappement de gaz brûlé, et une unité de commande qui commande le cadencement de soupape d au moins les soupapes d'admission,
   **caractérisé par** le procédé comportant l'ajustement du cadencement de fermeture de la soupape d'admission pour la commande de rapport air/carburant comportant les étapes consistant à :

   - mesurer une valeur lambda et déterminer un changement nécessaire de la valeur lambda pour un cycle de combustion consécutif,
   - générer un signal d'ajustement pour ajuster un cadencement de fermeture de soupape d'admission pour un cycle suivant sur la base du changement nécessaire de la valeur lambda,
   - déterminer si le cadencement de fermeture de soupape d'admission va survenir avant ou après par rapport à un point de commutation au niveau duquel un remplissage maximum du cylindre est obtenu pour ledit cycle suivant, et
   - changer la polarité dudit signal si on a déterminé qu'une commutation va survenir entre des cadencements de fermeture de soupape d'admission antérieur et ultérieur.

2. Procédé pour faire fonctionner un moteur selon la revendication 1, **caractérisé en ce que** le signal pour ajuster la fermeture de soupape d'admission est généré en :

   - comparant une valeur lambda mesurée avec une valeur nécessaire de lambda, et en faisant passer le signal de différence à travers une commande, et
   - calculant un changement nécessaire nominal de cadencement de fermeture de soupape d'admission ($\Delta$IVC) pour un cycle suivant.

3. Procédé pour faire fonctionner un moteur selon la revendication 2, **caractérisé par** un changement de la polarité de la sortie de commande lorsqu'une commutation entre des cadencements de fermeture de soupape d'admission antérieur et ultérieur ($IVC_E$, $IVC_L$) pour un cycle suivant est nécessaire.

4. Procédé pour faire fonctionner un moteur selon la revendication 2, **caractérisé par** la génération d'un signal d'ajustement pour ajuster un cadencement de fermeture de soupape d'admission pour un cycle immédiatement suivant, sur la base du changement nécessaire de la valeur lambda.

5. Procédé pour faire fonctionner un moteur selon la revendication 1, **caractérisé par** la génération d'un signal d'ajustement pour ajuster un cadencement de fermeture de soupape d'admission pour un cycle suivant pour chaque cylindre, sur la base du changement nécessaire de la valeur lambda.

6. Procédé pour faire fonctionner un moteur selon la revendication 1, **caractérisé par** la détermination du fait que la polarité du signal d'ajustement de fermeture de soupape d'admission doit être changée ou pas, en :

   - déterminant un mode de cadencement de fermeture de soupape d'admission en acquérant un signal provenant d'un sélecteur de mode dans l'unité de commande, lequel sélecteur détermine ledit mode pour le cycle suivant selon des paramètres de moteur mesurés,
   - déterminant si le cadencement de fermeture de soupape d'admission pour le cycle suivant provoque une commutation entre des modes de cadencement de fermeture de soupape d'admission antérieur et ultérieur,
   - générant un signal de correction indicatif d'un changement de polarité si une commutation est nécessaire.

7. Procédé pour faire fonctionner un moteur selon la revendication 1, **caractérisé par** la détermination du fait que la polarité du signal d'ajustement de fermeture de soupape d'admission doit être changée ou pas, en :

   - calculant le cadencement de fermeture de soupape d'admission pour le cycle suivant sur la base du cadencement de fermeture de soupape d'admission en cours et du signal d'ajustement ($\Delta$IVC),
   - déterminant si le cadencement de fermeture de soupape d'admission pour le cycle suivant provoque une commutation entre des cadencements de fermeture de soupape d'admission antérieur et ultérieur, et
   - générant un signal de correction indicatif d'un changement de polarité si une commutation est nécessaire.

8. Procédé pour faire fonctionner un moteur selon la revendication 6 ou 7, **caractérisé par** la détermination d'un signal d'ajustement de fermeture de soupape d'admission corrigé en multipliant ledit signal d'ajustement par ledit signal de correction.

9. Procédé pour faire fonctionner un moteur selon la revendication 1, **caractérisé par** la détermination d'une sensibilité de fermeture de soupape d'admission pour le cadencement de fermeture de soupape d'admission d'un cycle en cours en sélectionnant un facteur de correction de sensibilité à partir d'une matrice, sur la base d'une valeur mesurée pour des cadencements de fermeture de soupape sur la base d'une vitesse moteur et d'un cadencement de fermeture de soupape d'admission.

10. Procédé pour faire fonctionner un moteur selon la revendication 9, **caractérisé par** la détermination d'un mode de cadencement de fermeture de soupape d'admission en acquérant un signal à partir d'un sélecteur de mode dans l'unité de commande, lequel sélecteur détermine ledit mode pour le cycle suivant selon des paramètres de moteur mesurés.

11. Procédé pour faire fonctionner un moteur selon la revendication 10, **caractérisé par** la détermination d'un signal d'ajustement de fermeture de soupape d admission corrigé en multipliant ledit signal d'ajustement par ledit signal de correction.

12. Moteur à combustion interne muni d'au moins un cylindre (1), comportant :

   - un injecteur de carburant (2), à travers lequel du carburant est injecté dans une chambre de combustion, pour chaque cylindre,
   - un piston (5) dans le cylindre moteur, dont l'action amène un mélange d'air et de carburant situé dans la chambre de combustion à être comprimé,
   - au moins une soupape d'admission (6) ayant un cadencement de soupape variable par cylindre pour admission d'un gaz combustible,
   - au moins une soupape d'échappement (7) pour échappement de gaz brûlés,
   - une unité de commande (4) qui commande la quantité d'injection de carburant par cycle de combustion injectée à travers chaque injecteur de carburant, et le cadencement de soupape d'au moins les soupapes d'admission,
   - un premier capteur (13) fourni pour mesurer un rapport air/carburant, et
   - au moins un capteur supplémentaire pour mesurer un paramètre de fonctionnement du moteur,

**caractérisé en ce que** l'unité de commande est agencée pour ajuster le cadencement de fermeture de la soupape d'admission pour commander le rapport air/carburant, de sorte que l'unité de commande est munie :

- d'un tronçon de calcul de valeur lambda (21), agencé pour calculer un changement nécessaire d'une valeur lambda ($\Delta\lambda$) pour un cycle de combustion suivant,
- un tronçon de calcul d'ajustement de fermeture de soupape d'admission (22), agencé pour calculer un signal d'ajustement ($\Delta$IVC) pour ajuster un cadencement de fermeture de soupape d'admission pour un cycle suivant sur la base du changement nécessaire de la valeur lambda,
- un tronçon de calcul de mode de fermeture de soupape d'admission, agencé pour calculer si le cadencement de fermeture de soupape d'admission pour ledit cycle suivant va survenir avant ou après un point de commutation au niveau duquel un remplissage maximum du cylindre est obtenu pour ledit cycle suivant, et
- un tronçon de changement de polarité, agencé pour modifier la polarité dudit signal si on détermine qu'une commutation va survenir entre les cadencements de fermeture de soupape d'admission antérieur et ultérieur.

13. Moteur à combustion selon la revendication 12, **caractérisé en ce que** le tronçon de calcul du mode de fermeture de soupape d'admission est muni d'un sélecteur de mode de fermeture de soupape d'admission, lequel sélecteur détermine si un cadencement de fermeture de soupape d'admission antérieur ou ultérieur est nécessaire pour le cycle suivant.

14. Moteur à combustion selon la revendication 12, **caractérisé en ce que** l'unité de commande est en outre munie d'un tronçon de détermination de sensibilité de fermeture de soupape d'admission (23), agencé pour déterminer une sensibilité de fermeture de soupape d'admission pour le cadencement de fermeture de soupape d'admission pour le cycle suivant, sur la base d'un mode de fermeture de soupape d'admission calculé, et de valeurs mesurées pour la vitesse moteur et le cadencement de fermeture de soupape d'admission, en effectuant l'interpolation d'un facteur de correction de sensibilité à partir d'au moins une matrice mémorisée dans l'unité de commande.

15. Moteur à combustion selon la revendication 14, **caractérisé en ce que** l'unité de commande est munie en outre d'un tronçon de correction (25), agencé pour calculer un signal d'ajustement de fermeture de soupape d'admission corrigé ($\Delta$IVC$_{CORR}$) en multipliant ledit signal d'ajustement ($\Delta$IVC) par un signal représentant ledit facteur de correction (F$_{CORR}$).

16. Moteur à combustion selon la revendication 12, **caractérisé en ce que** le tronçon de calcul d'ajustement de fermeture de soupape d'admission comporte une commande (22), agencée pour traiter un signal de différence ($\Delta\lambda$) à partir d'un comparateur de valeur lambda, et calculant ledit signal d'ajustement de fermeture de soupape d'admission ($\Delta$IVC).

17. Dispositif de mémorisation pouvant être lu par un ordinateur ayant, mémorisées dans celui-ci, des données représentant des instructions pouvant être exécutées par un ordinateur pour faire fonctionner un moteur à combustion interne, le moteur ayant un piston disposé dans un cylindre pour définir une chambre de combustion, des soupapes d'admission pour admettre de l'air frais dans le cylindre, un injecteur de carburant pour injecter un carburant dans la chambre de combustion, et des soupapes d'échappement pour évacuer des gaz d'échappement résultant d'une combustion dans le cylindre, dans lequel des cadencements d'ouverture et de fermeture d'au moins les soupapes d'admission sont ajustables, le dispositif de mémorisation pouvant être lu par un ordinateur comportant :

- des instructions pour ajuster des cadencements d'ouverture et de fermeture d'au moins les soupapes d'admission, de telle sorte que le piston va en va-et-vient dans le cylindre pour effectuer une phase d'échappement, une phase d'admission, une phase de compression et une phase de détente,
- des instructions pour mesurer une valeur lambda et déterminer un changement nécessaire de la valeur lambda pour un cycle de combustion suivant,
- des instructions pour générer un signal d'ajustement afin d ajuster un cadencement de fermeture de soupape d'admission pour un cycle suivant sur la base du changement nécessaire de la valeur lambda,
- des instructions pour déterminer si le cadencement de fermeture de soupape d'admission va survenir avant ou après un point de commutation au niveau duquel un remplissage maximum du cylindre est obtenu pour ledit cycle suivant, et
- des instructions pour changer la polarité dudit signal si on détermine qu'une commutation va survenir entre des cadencements de fermeture de soupape d'admission antérieur et ultérieur.

Fig.1

Fig.2

EIVC

Fig.3a

LIVC

Fig.3b